# EUROPÄISCHE PATENTSCHRIFT

(11) **EP 0 703 288 B1**
(45) Veröffentlichungstag und Bekanntmachung des Hinweises auf die Patenterteilung: **04.11.1998**
(21) Anmeldenummer: 95112613.5
(22) Anmeldetag: 10.08.1995
(51) Int. Cl.: C10B 1/10, F27B 7/10

(54) **Mit Heizrohren ausgestattete Heizkammer für Festgut**
Heating vessel for solid materials equipped with heating tubes
Enceinte chauffante pour matériaux solides équipée de tubes chauffants

(30) Priorität: 23.08.1994 DE 4429908
(43) Veröffentlichungstag der Anmeldung: 27.03.1996
(73) Patentinhaber: SIEMENS AKTIENGESELLSCHAFT, 80333 München (DE)
(72) Erfinder: Tratz, Herbert, Dr., D-91242 Ottensoos (DE); Boretzky, Joachim, Dipl.-Ing., D-91325 Adelsdorf (DE); Werdinig, Helmut, Dipl.-Ing., D-90408 Nürnberg (DE); Ebert, Anton, D-73479 Ellwangen-Schrezheim (DE)

(56) Entgegenhaltungen:
- DE-A- 1 931 148
- DE-A- 2 944 693
- DE-A- 4 329 871
- DE-C- 382 865
- FR-A- 2 323 959
- GB-A- 2 097 910
- THE ENGINEER, Bd.233, Nr.6021, 29. Juli 1971 'new twist apollo cools oil better'

## Beschreibung

Die Erfindung bezieht sich auf eine um ihre Längsachse drehbare Heizkammer für Festgut, insbesondere eine Schweltrommel für Abfall, mit einer Anzahl von in ihrem Innenraum untergebrachten, etwa parallel zueinander ausgerichteten Heizrohren, die von einem Heizgas durchströmbar sind.

Die Heizkammer wird bevorzugt zur thermischen Abfallentsorgung eingesetzt, insbesondere als Schweltrommel für das Schwel-Brenn-Verfahren.

Auf dem Gebiet der Abfallbeseitigung ist das sogenannte Schwel-Brenn-Verfahren bekannt geworden. Das Verfahren und eine danach arbeitende Anlage zur thermischen Abfallentsorgung sind beispielsweise in der EP-A-0 302 310 sowie in der DE-A-38 30 153 beschrieben. Die Anlage zur thermischen Abfallentsorgung nach dem Schwel-Brenn-Verfahren enthält als wesentliche Komponenten eine Schweleinrichtung (Schweltrommel, Pyrolysereaktor) und eine Hochtemperatur-Brennkammer. Die Schweleinrichtung setzt den über eine Abfall-Transporteinrichtung aufgegebenen Abfall in einem unterstöchiometrisch ablaufenden Schwel- oder Pyrolysevorgang in Schwelgas und Pyrolysereststoff (festes Schwelgut) um. Das Schwelgas und der Pyrolysereststoff werden nach geeigneter Aufarbeitung dem Brenner der Hochtemperatur-Brennkammer zugeführt. In der Hochtemperatur-Brennkammer entsteht schmelzflüssige Schlacke, die über einen Abzug entnommen wird und die nach Abkühlung in glasartiger Form vorliegt. Das entstehende Rauchgas wird über eine Rauchgasleitung einem Kamin als Auslaß zugeführt. In diese Rauchgasleitung sind insbesondere ein Abhitzedampferzeuger als Kühleinrichtung, eine Staubfilteranlage und eine Rauchgasreinigungsanlage eingebaut. Weiterhin befindet sich in der Rauchgasleitung ein Gasverdichter, der direkt am Ausgang der Rauchgasreinigungsanlage angeordnet und als Saugzuggebläse ausgebildet sein kann. Der eingebaute Gasverdichter dient zur Aufrechterhaltung eines - wenn auch nur geringen - Unterdrucks in der Pyrolysetrommel. Durch diesen Unterdruck wird verhindert, daß Schwelgas durch die Ringdichtungen der Pyrolysetrommel nach außen in die Umgebung austritt.

Durch die Abfall-Transporteinrichtung wird Abfall unterschiedlicher Art, zum Beispiel zerkleinerter Hausmüll, hausmüllähnlicher Industrieabfall und zerkleinerter Sperrmüll, aber auch entwässerter Schlamm, der Schweltrommel zugeleitet.

Als Schwelkammer (Pyrolysereaktor) wird in der Regel eine sich drehende, relativ lange Schweltrommel eingesetzt, die innen eine Vielzahl von parallelen Heizrohren aufweist, an denen der Abfall weitgehend unter Luftabschluß aufgeheizt wird. Die Schweltrommel dreht sich dabei um ihre Längsachse. Vorzugsweise ist die Längsachse der Schweltrommel etwas gegenüber der Horizontalen geneigt, so daß das feste Schwelgut sich am Ausgang der Schweltrommel ansammeln und von dort über ein Schwelgas- und Reststoff-Austragsgehäuse mit Reststoff-Fallschacht in Richtung auf eine Reststoff-Trennvorrichtung ausgetragen werden kann.

In der Schweltrommel wird das Schwelgut durch die Heizrohre erwärmt. Zu diesem Zweck durchströmt das Heizgas die in Längsrichtung der Schweltrommel angeordneten Heizrohre. Dabei wird in der Regel nach dem Gegenstromprinzip vorgegangen, das heißt das Heizgas tritt im Bereich des heißen Trommelendes ein, und es verläßt die Schweltrommel im Bereich des kalten Trommelendes. Das Problem, das hierbei auftritt, besteht darin, daß im Bereich des kalten Trommelendes ein relativ hoher Wärmeenergiebedarf und im Bereich des heißen Trommelendes ein relativ geringer Wärmeenergiebedarf besteht. Der höhere Energiebedarf entsteht insbesondere bei der Trocknung des Schwelgutes, und der geringere Energiebedarf entsteht bei der Verschwelung desselben. Der relativ hohe Wärmeenergiebedarf ergibt sich - in Transportrichtung des Abfalls gesehen - etwa im Bereich zwischen etwa 0 und 2/3 und der geringe Energiebedarf ergibt sich etwa im Bereich zwischen 2/3 und der gesamten Länge der Schweltrommel.

Nun ist bei dieser Art des Gegenstromprinzips festzustellen, daß im Bereich des relativ geringen Energiebedarfs eine hohe Heizgastemperatur mit hoher Heizgas-Strömungsgeschwindigkeit auftritt. Der Wärmeübergang vom Heizgas an das Heizrohr und von dort an den Feststoff ist damit relativ gut. Im Bereich des hohen Energiebedarfs dagegen ergibt sich eine niedrigere Heizgastemperatur, denn das Heizgas hat sich inzwischen abgekühlt; damit ergibt sich eine kleinere Heizgasgeschwindigkeit und letztlich ein deutlich schlechterer Wärmeübergang vom Heizgas in die Heizrohre und damit an den in der Schweltrommel befindlichen Abfall.

Aufgabe der Erfindung ist es, eine Heizkammer der eingangs genannten Art derart auszugestalten, daß im Bereich des hohen Energiebedarfs, also im Bereich der niedrigeren Heizgastemperatur, der Wärmeübergang verbessert wird.

Diese Aufgabe wird erfindungsgemäß dadurch gelöst, daß - in Richtung der Strömung des Heizgases gesehen - im Endbereich der Heizrohre innerhalb dieser Heizrohre Turbulatoren untergebracht sind.

Mit Hilfe der Turbulatoren wird erreicht, daß im Bereich des hohen Energiebedarfs eine hohe Turbulenz in der Grenzschicht an der Innenwand des betreffenden Heizrohres erzeugt wird. Damit geht einher eine Erhöhung der mittleren Heizgas-Geschwindigkeit. Dies hat eine Verbesserung des Wärmeübergangs zur Folge.

Bevorzugt werden als Turbulatoren voneinander beabstandete Turbulator-Ringe eingesetzt. Diese bestehen bevorzugt aus einem Edelstahl. Sie können einen rechteckigen, speziell einen quadratischen oder aber einen runden Querschnitt besitzen.

Weitere vorteilhafte Ausgestaltungen und Weiterbildungen sind in den Unteransprüchen beschrieben.

Ausführungsbeispiele der Erfindung werden im folgenden anhand von acht Figuren näher erläutert. Es zeigen:
Figur 1 den Eingangsteil einer Schwel-Brenn-Anlage mit einer Schweltrommel, deren Heizrohre nach dem Gegenstromprinzip von Heizgas durchströmt werden;
Figur 2 im Längsschnitt ein Heizrohr für eine Schweltrommel mit einer Anzahl eingesetzter ringförmiger Turbulatoren;
Figur 3 einen vergrößerten Ausschnitt eines solchen Heizrohres;
Figur 4 das Heizrohr von Figur 3 im Querschnitt;
Figur 5 im Längsschnitt einen vergrößerten Ausschnitt eines Heizrohrs mit modifizierter Anordnung der eingesetzten ringförmigen Turbulatoren;
Figur 6 das Heizrohr von Figur 5 im Querschnitt;
Figur 7 im Längsschnitt ein Heizrohr mit eingesetzten Turbulatoren und mit einem eingesetzten Verdrängungskörper nach einer ersten Ausführungsform und
Figur 8 im Längsschnitt ein Heizrohr mit eingesetzten Turbulatoren und mit einem Verdrängungskörper nach einer zweiten Ausführungsform.

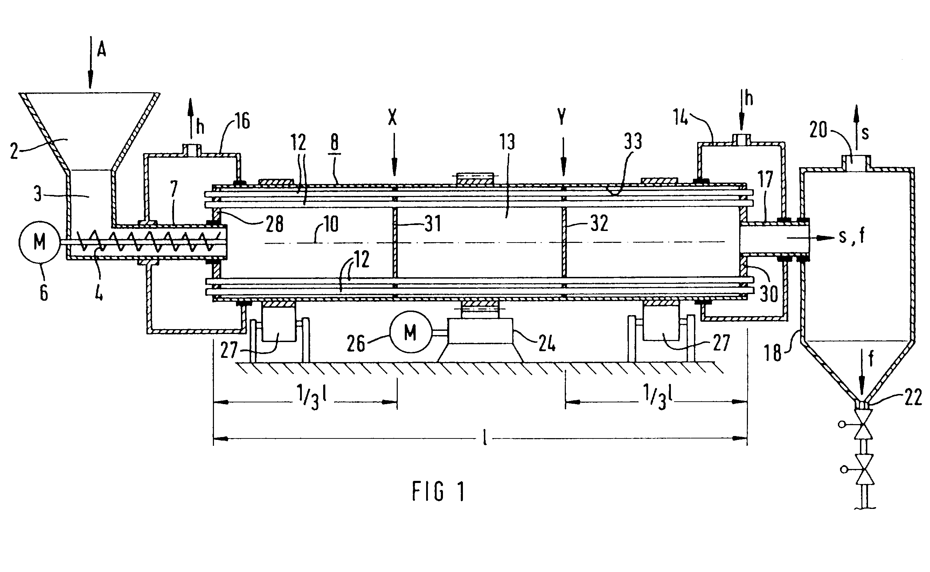

Nach Figur 1 wird fester Abfall A über eine Zufuhr- oder Aufgabeeinrichtung 2 mit Fallschacht 3 und über eine Schnecke 4, die von einem Motor 6 angetrieben wird und in einem Aufgaberohr 7 angeordnet ist, zentral in einen Pyrolysereaktor oder eine Schwelkammer 8 eingebracht. Die Schwelkammer 8 ist im Ausführungsbeispiel eine innenbeheizbare, um ihre Längsachse 10 drehbare Schwel- oder Pyrolysetrommel, die eine Länge von 15 bis 30 m besitzen kann, die bei 300 bis 600 °C arbeitet, die weitgehend unter Sauerstoffabschluß betrieben wird und die neben flüchtigem Schwelgas s einen weitgehend festen Pyrolysereststoff f erzeugt. Es handelt sich dabei um eine innenberohrte Schweltrommel 8 mit einer Vielzahl (zum Beispiel 50 bis 200) von parallel zueinander ausgerichteten Heizrohren 12, von denen in Figur 1 nur vier gezeigt sind, die im Innenraum 13 angeordnet sind. Am rechten oder "heißen" Ende ist ein Einlaß für Heizgas h in Form einer ruhenden, abgedichteten Heizgas-Einlaßkammer 14 vorgesehen, und am linken oder "kalten" Ende ist ein Auslaß für das Heizgas h in Form einer ruhenden, abgedichteten Heizgas-Auslaßkammer 16 angeordnet. Die Längsachse 10 der Schweltrommel 8 ist bevorzugt gegenüber der Horizontalen geneigt, so daß der Auslaß am rechts gelegenen "heißen" Ende tiefer liegt als der links gezeigte Einlaß für den Abfall A. Die Schweltrommel 8 ist bevorzugt auf leichtem Unterdruck gegenüber der Umgebung gehalten.

Der Pyrolysetrommel 8 ist ausgangs- oder austragsseitig über ein sich mitdrehendes zentrales Austragsrohr 17 eine Austragsvorrichtung 18 nachgeschaltet, die mit einem Schwelgas-Abzugsstutzen 20 für den Abgang des Schwelgases s und mit einem Pyrolysereststoffausgang 22 für die Abgabe des festen Pyrolysereststoffes f versehen ist. Eine an den Schwelgas-Abzugsstutzen 20 angeschlossene Schwelgasleitung ist mit dem Brenner einer (nicht gezeigten) Hochtemperatur-Brennkammer verbunden.

Die Drehbewegung der Schweltrommel 8 um ihre Längsachse 10 wird durch einen Antrieb 24 in Form eines Getriebes bewirkt, der an einen Motor 26 angeschlossen ist. Die Antriebsmittel 24, 26 arbeiten zum Beispiel auf einem Zahnkranz, der am Umfang der Schweltrommel 8 befestigt ist. Die Lager der Schweltrommel 8 sind mit 27 bezeichnet.

Aus Figur 1 wird deutlich, daß die Heizrohre 12 jeweils mit ihrem einen Ende an einer ersten Endplatte 28 und mit ihrem anderen Ende an einer zweiten Endplatte 30 befestigt sind. Die Befestigung an den Endplatten 28, 30 ist so getroffen, daß sich bevorzugt eine leichte Austauschbarkeit der Heizrohre 12 ergibt. Das Ende der Heizrohre 12 ragt jeweils durch eine Öffnung aus dem Innenraum 13 nach links in die Auslaßkammer 16 bzw. nach rechts in die Einlaßkammer 14 hinein. Die Achse der Heizrohre 12 ist dabei jeweils senkrecht zur Oberfläche der Endplatten 28, 30 ausgerichtet. Bei der gezeigten Konstruktion ist beachtet, daß die einzelnen Heizrohre 12 thermisch und mechanisch hoch beansprucht sind, und daß sich die Endplatten 28, 30, die auch als Rohrplatten oder Trommelrohrböden bezeichnet werden könnten, um die Längsachse 10 der Schweltrommel 8 mitdrehen.

Zwischen den Endplatten 28, 30 sind zwei Stützstellen X, Y zum Stützen der (andernfalls möglicherweise durchhängenden) Heizrohre 12 vorgesehen. In Transportrichtung des Abfalls A gesehen liegt die erste Stützstelle X etwa bei einem Drittel (1/3 1) und die zweite Stützstelle Y etwa bei zwei Dritteln (2/3 1) der Gesamtlänge 1 der Schweltrommel 8. Hier sind Trag- oder Stützkonsolen 31, 32 in Form von gerundeten Lochplatten aus Metall, zum Beispiel aus Stahl, vorgesehen. Sie sind an der Innenwand 33 befestigt.

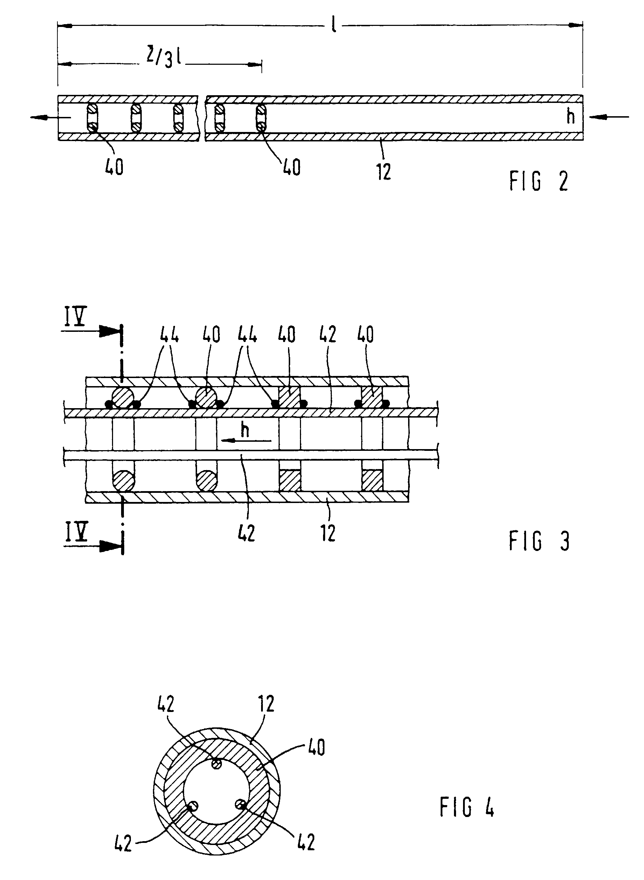

Nach Figur 2 wird ein Heizrohr 12 in Pfeilrichtung von einem Heizgas h durchströmt. Im linken Teilbereich des Heizrohrs 12, nämlich dort, wo ein guter Wärmeübergang auf den in die Schweltrommel eintretenden Abfall A zwecks Verdampfung der darin enthaltenen Feuchtigkeit stattfinden soll, also im Endbereich oder speziell den letzten beiden Dritteln der Länge 1 (gesehen in Strömungsrichtung des Heizgases h), ist im Inneren eine Anzahl von Turbulatoren 40 angeordnet. Es handelt sich speziell um ringförmige Turbulatoren oder Turbulator-Ringe, die in gleichmäßigem oder nicht-gleichmäßigem Abstand zueinander entlang der Strömungsrichtung angeordnet sind. Sie bestehen bevorzugt aus einem Edelstahl. Sie dienen dazu, im 2/3 1-Bereich des Heizrohrs 12 eine hohe Turbulenz an der Grenzschicht und so eine Erhöhung der Gasgeschwindigkeit zu erzeugen. Dies führt zu einem besseren Wärmeübergang des Heizgases h, das sich ja auf seinem Weg von rechts nach links abkühlt.

Aus den Figuren 3 und 4 wird deutlich, daß die Turbulator-Ringe 40 einen runden oder rechteckigen, speziell auch quadratischen Querschnitt besitzen können.

Die Turbulator-Ringe 40 sind hier im Inneren des Heizrohrs 12 mit Hilfe von drei sich in Längsrichtung erstreckenden Distanz-Haltedrähten 42 untergebracht. Die Schweißstellen zwischen den Turbulator-Ringen 40 und den Distanz-Haltedrähten 42 sind mit 44 bezeichnet. In den Figuren 3 und 4 liegen die Turbulator-Ringe 40 an der Innenwand des Heizrohrs 12 an. Sie verringern in ihrem Wirkungsbereich den freien Strömungsquerschnitt für das Heizgas h, erhöhen damit die Strömungsgeschwindigkeit und führen zu Wirbelbildungen. Damit wird, wie bereits ausgeführt, der Wärmeübergang vom Heizgas h auf das Heizrohr 12 und von dort auf den Abfall erhöht.

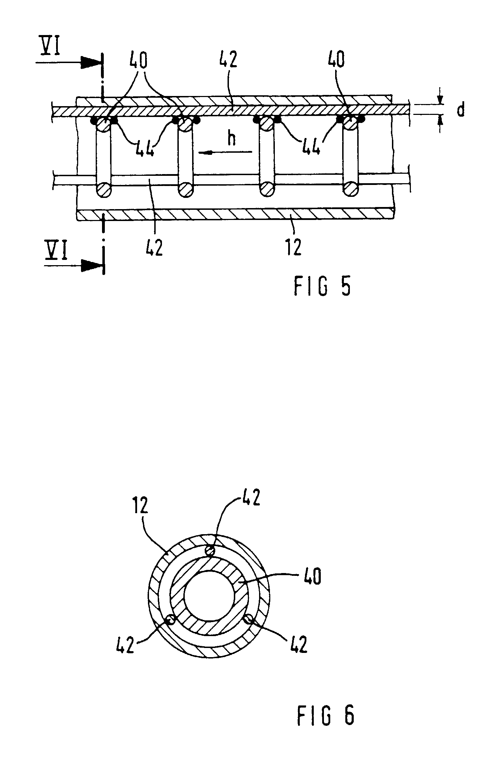

Eine weitere Ausführungsform ist in den Figuren 5 und 6 gezeigt. Hier werden die Turbulator-Ringe 40 in einem bestimmten Abstand d zur Innenwand des Heizrohrs 12 gehalten. Bevorzugt ist eine konzentrische Anordnung. Um diesen Abstand d und den gegenseitigen Abstand der Turbulator-Ringe 40 einzuhalten, sind wiederum Haltedrähte 42 vorgesehen. Diese sind hier an der Außenseite der einzelnen Turbulator-Ringe 40 angeordnet und dort durch Schweißnähte 44 befestigt. Die Dicke d der Haltedrähte 42 entspricht dem Abstand d zwischen dem Außendurchmesser der Turbulator-Ringe 40 und dem Innendurchmesser des Heizrohres 12. Der Effekt bezüglich des Wärmeübergangs ist praktisch derselbe wie bei der Ausführungsform nach den Figuren 3 und 4.

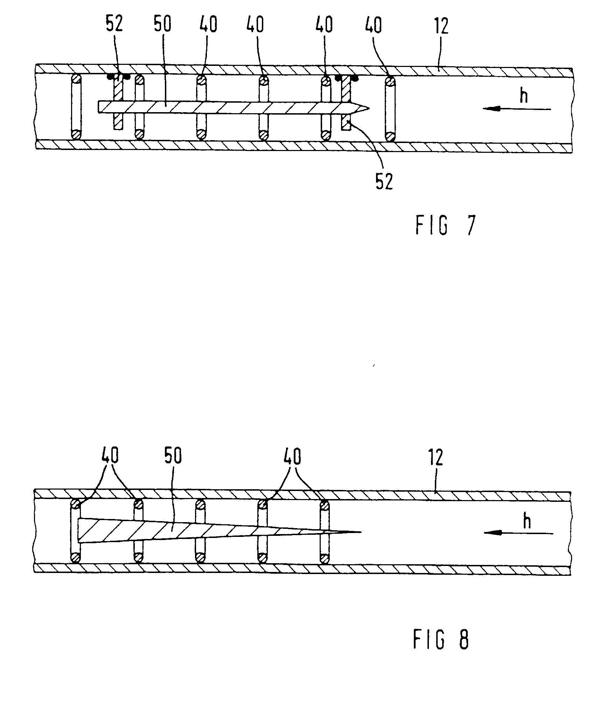

In den Figuren 7 und 8 sind Weiterbildungen dargestellt. Es war bereits erwähnt worden, daß sich mit der Abkühlung des Heizgases h dessen Strömungsgeschwindigkeit verringert. Diese Strömungsgeschwindigkeit wird nun durch mindestens einen Verdrängungskörper 50, der insbesondere mittig im Heizrohr 12 angeordnet ist, wieder erhöht. In Kombination mit den beschriebenen Turbulatoren 40 ergibt sich damit wiederum eine Steigerung des Wärmeübergangs. Damit kann man über die gesamte Länge 1 der einzelnen Heizrohre 12 trotz Abkühlung des Heizgases h einen annähernd gleichmäßigen Wärmeübergang vom Heizgas h auf die Wand des betreffenden Heizrohrs 12 erreichen. Diese Maßnahmen können dazu führen, daß die Länge der Schweltrommel 8 - gegenüber der herkömmlichen Ausführung - kürzer gehalten werden kann. Dies führt zu einer nennenswerten Reduzierung des Herstellungspreises der Schweltrommel 8.

In Figur 7 ist gezeigt, daß der Verdrängungskörper 50, der bevorzugt aus einem Edelstahl besteht, im wesentlichen zylindrisch ausgebildet sein kann. Eine Spitze des Verdrängungskörpers 50 ist dem Heizgas h entgegengerichtet. In Figur 8 ist demgegenüber gezeigt, daß der Verdrängungskörper 50, der ebenfalls aus einem Edelstahl bestehen kann, als Pyramide oder Kegel ausgeführt sein kann. Auch hier weist die Spitze des Verdrängungskörpers 50 der Strömung entgegen.

Die Verdrängungskörper 50 von Figur 7 und 8 sind jeweils mittig im Heizrohr 12 befestigt. Hierzu dienen jeweils drei axial um 120° gegeneinander versetzte Stützfüße 52, die am vorderen und hinteren Ende der Verdrängungskörper 50 vorgesehen sind. Solche Stützfüße 52 sind der Übersichtlichkeit wegen nur in Figur 7 gezeigt. Die Länge des Verdrängungskörpers 50 erstreckt sich jeweils über mehrere Turbulator-Ringe 40. Entlang der gesamten Strecke von 2/3 l können mehrere Verdrängungskörper 50 vorgesehen sein.

## Patentansprüche

1. Um ihre Längsachse (10) drehbare Heizkammer für Festgut, insbesondere Schweltrommel (8) für Abfall (A), mit einer Anzahl von in ihrem Innenraum (13) untergebrachten, etwa parallel zueinander ausgerichteten Heizrohren (12), die von einem Heizgas (h) durchströmbar sind,
**dadurch gekennzeichnet,** daß - in Richtung der Strömung des Heizgases (h) gesehen - im Endbereich (2/3 l) der Heizrohre (12) innerhalb dieser Heizrohre (12) Turbulatoren (40) untergebracht sind.

2. Heizkammer nach Anspruch 1,
**dadurch gekennzeichnet**, daß die Turbulatoren beabstandete Turbulator-Ringe (40) sind, die bevorzugt aus einem Edelstahl bestehen.

3. Heizkammer nach Anspruch 2,
**dadurch gekennzeichnet,** daß die Turbulator-Ringe (40) einen rechteckigen, bevorzugt aber einen runden Querschnitt besitzen.

4. Heizkammer nach Anspruch 2 oder 3,
**dadurch gekennzeichnet,** daß die Turbulator-Ringe (40) durch mindestens zwei Distanzhaltedrähte (42) auf einem vorgegebenen Abstand voneinander gehalten sind.

5. Heizkammer nach Anspruch 4,
**dadurch gekennzeichnet,** daß die Distanzhaltedrähte (42) innerhalb oder außerhalb der Turbulator-Ringe (40) an diesen befestigt sind.

6. Heizkammer nach einem der Ansprüche 1 bis 5,
**dadurch gekennzeichnet,** daß im Endbereich (2/3 1) der Heizrohre (12) innerhalb dieser Heizrohre (12) ein Verdrängungskörper (50) angeordnet ist.

7. Heizkammer nach Anspruch 6,
**dadurch gekennzeichnet,** daß der Verdrängungskörper (50) jeweils mittig im betreffenden Heizrohr (12) befestigt ist.

8. Heizkammer nach Anspruch 7,
**dadurch gekennzeichnet,** daß der Verdrängungskörper (50) durch drei Stützfüße (52) an jedem seiner beiden Enden im Heizrohr (12) befestigt ist.

9. Heizkammer nach einem der Ansprüche 6 bis 8,
**dadurch gekennzeichnet**, daß der Verdrängungskörper (50) im wesentlichen zylindrisch oder aber konisch ausgebildet ist.

10. Heizkammer nach einem der Ansprüche 6 bis 9,
**dadurch gekennzeichnet,** daß sich die Länge des Verdrängungskörpers (50) über mehrere Turbulator-Ringe (40) erstreckt.

11. Heizkammer nach einem der Ansprüche 6 bis 10,
**dadurch gekennzeichnet**, daß der Verdrängungskörper (50) aus einem Edelstahl besteht.

12. Heizkammer nach einem der Ansprüche 1 bis 11, bei der der Abfall (A) im Gegenstromprinzip zur Richtung der Strömung des Heizgases (h) aufgebbar ist,
**dadurch gekennzeichnet,** daß die Turbulatoren (40) etwa in den letzten beiden Dritteln der Länge (1) der Heizrohre (12) untergebracht sind.

## Claims

1. Heating chamber which can rotate about its longitudinal axis (10) for solid material, in particular carbonization drum (8) for waste (A), having a number of heating tubes (12) which are accommodated in its interior (13) and orientated roughly parallel to each other through which a heating gas (h) can flow, characterized in that turbulators (40) are accommodated within these heating tubes (12) in the end region (2/3 1) of the heating tubes (12), seen in the direction of flow of the heating gas (h).

2. Heating chamber according to Claim 1, characterized in that the turbulators are spaced turbulator rings (40) which preferably consist of a stainless steel.

3. Heating chamber according to Claim 2, characterized in that the turbulator rings (40) have a rectangular, but preferably a round, cross-section.

4. Heating chamber according to Claim 2 or 3, characterized in that the turbulator rings (40) are held at a predetermined distance from each other by at least two spacer wires (42).

5. Heating chamber according to Claim 4, characterized in that the spacer wires (42) are attached to the turbulator rings (40) inside or outside these.

6. Heating chamber according to one of Claims 1 to 5, characterized in that a displacement body (50) is arranged within the heating tubes (12) in the end region (2/3 l) of these heating tubes (12).

7. Heating chamber according to Claim 6, characterized in that the displacement body (50) is in each case attached centrally in the relevant heating tube (12).

8. Heating chamber according to Claim 7, characterized in that the displacement body (50) is attached by three support feet (52) at each of its two ends in the heating tube (12).

9. Heating chamber according to one of Claims 6 to 8, characterized in that the displacement body (50) is essentially constructed to be cylindrical or else conical.

10. Heating chamber according to one of Claims 6 to 9, characterized in that the length of the displacement body (50) extends over a plurality of turbulator rings (40).

11. Heating chamber according to one of Claims 6 to 10, characterized in that the displacement body (50) consists of a stainless steel.

12. Heating chamber according to one of Claims 1 to 11, in which the waste (A) can be delivered in the counter-current flow principle to the direction of flow of the heating gas (h), characterized in that the turbulators (40) are accommodated roughly in the last two thirds of the length (l) of the heating tubes (12).

## Revendications

1. Enceinte chauffante pour des matériaux solides, rotative autour de son axe (10) longitudinal, notamment tambour (8) de carbonisation lente pour des déchets (A), comprenant un certain nombre de tubes (12) chauffants logés dans son espace (13) intérieur, à peu prés parallèlement entre eux, et dans lesquels peut passer un gaz (h) de chauffage,
**caractérisée** en ce que des générateurs (40) de turbulence sont logés - vu dans la direction d'écoulement du gaz (h) de chauffage - dans la région (2/31) d'extrémité des tubes (12) chauffants à l'intérieur de ces tubes (12) chauffants.

2. Enceinte chauffante suivant la revendication 1, **caractérisée** en ce que les générateurs de turbulence sont des bagues (40) de mise en turbulence mutuellement distantes, qui sont de préférence réalisées en acier fin.

3. Enceinte chauffante suivant la revendication 2, **caractérisée** en ce que les bagues (40) de mise en turbulence possèdent une section rectangulaire, mais de préférence une section circulaire.

4. Enceinte chauffante suivant la revendication 2 ou 3, **caractérisée** en ce que les bagues (40) de mise en turbulence sont maintenues à une distance prédéterminée entre elles par au moins deux fils (42) métalliques d'écartement.

5. Enceinte chauffante suivant la revendication 4, **caractérisée** en ce que les fils (42) métalliques d'écartement sont fixés à l'intérieur ou à l'extérieur des bagues (40) de mise en turbulence sur ces dernières.

6. Enceinte chauffante suivant l'une des revendications 1 à 5, **caractérisée** en ce qu'un corps (50) de refoulement est disposé dans la région (2/31) d'extrémité des tubes (12) chauffants à l'intérieur de ces tubes (12) chauffants.

7. Enceinte chauffante suivant la revendication 6, **caractérisée** en ce que le corps (50) de refoulement est respectivement fixé au milieu dans le tube (12) chauffant concerné.

8. Enceinte chauffante suivant la revendication 7, **caractérisée** en ce que le corps (50) de refoulement est fixé dans le tube (12) chauffant par trois pieds (52) d'appui à chacune de ses deux extrémités.

9. Enceinte chauffante suivant l'une des revendications 6 à 8, **caractérisée** en ce que le corps (50) de refoulement est réalisé essentiellement cylindrique ou bien conique.

10. Enceinte chauffante suivant l'une des revendications 6 à 9, **caractérisée** en ce que la longueur du corps (50) de refoulement s'étend sur plusieurs bagues (40) de mise en turbulence.

11. Enceinte chauffante suivant l'une des revendications 6 à 10. **caractérisée** en ce que le corps (50) de refoulement est réalisé en acier fin.

12. Enceinte chauffante suivant l'une des revendications 1 à 11, dans laquelle les déchets (A) peuvent être chargés à contre-courant par rapport à la direction d'écoulement du gaz (h) de chauffage,
**caractérisée** en ce que les générateurs (40) de turbulence sont logés environ dans les deux derniers tiers de la longueur (I) des tubes (12) chauffants.
